# EUROPEAN PATENT APPLICATION

(11) **EP 4 365 748 A1**
(43) Date of publication of application: **08.05.2024**
(21) Application number: 22844951.8
(22) Date of filing: 13.05.2022
(51) Int. Cl.: G06F 12/06

(54) **DATA ACCESS METHOD AND RELATED DEVICE**

(30) Priority: 23.07.2021 CN 202110833852; 30.09.2021 CN 202111163646
(71) Applicant: Huawei Technologies Co., Ltd., Longgang Shenzhen, Guangdong 518129 (CN)
(72) Inventor: CHEN, Can, Shenzhen, Guangdong 518129 (CN); CHEN, Ming, Shenzhen, Guangdong 518129 (CN); TAN, Chunyi, Shenzhen, Guangdong 518129 (CN); YU, Bowei, Shenzhen, Guangdong 518129 (CN)
(74) Representative: Gill Jennings & Every LLP
(86) International application number: PCT/CN2022/092643
(87) International publication number: WO 2023/000784

(57) **Abstract**

This application provides a data access method. The method includes: A memory expansion card receives a first data access request generated by a computing device based on an internal bus protocol. Then, the memory expansion card performs protocol conversion on the first data access request to obtain a second data access request in an external bus protocol format, where the external bus protocol includes a bus protocol for accessing external memory space of the computing device. Further, the memory expansion card accesses the external memory space based on the second data access request. The memory expansion card shields a difference between the bus protocols, and provides internal memory space for the computing device, for example, internal memory space converted from the external memory space, to enable the computing device to access an external memory without swapping data into a memory of the computing device, thereby improving data access efficiency of the computing device.

## Description

This application claims priorities to Chinese Patent Application No. 202110833852.9, filed with the China National Intellectual Property Administration on July 23, 2021 and entitled "METHOD AND APPARATUS FOR DATA ACCESS", and to Chinese Patent Application No. 202111163646.8, filed with the China National Intellectual Property Administration on September 30, 2021 and entitled "DATA ACCESS METHOD AND RELATED DEVICE", both of which are incorporated herein by reference in their entireties.

### TECHNICAL FIELD

This application relates to the field of storage technologies, and in particular, to a data access method, a data processing system, a memory expansion card, a computer-readable storage medium, and a computer program product.

### BACKGROUND

With continuous development of storage technologies, different types of storage media are generated. For example, the storage media may be classified into volatile storage media (also referred to as memories) such as a register (register), a cache (cache), and a dynamic randomaccess memory (DRAM), and non-volatile storage media (also referred to as peripherals) such as a solid state drive (solid state drive), a hard disk drive (HDD), and a magnetic tape. The foregoing storage media may form a pyramid structure based on an access speed and a capacity. The storage medium at the top of the pyramid structure has a high access speed and a small capacity, and the storage medium at the bottom of the pyramid structure has a low access speed but a large capacity.

When processing input output (IO) data, a processor such as a central processing unit (CPU) processes data in the memory. When to-be-processed data is not in the memory, a swap-in/swap-out operation on peripheral data and memory data further needs to be performed.

Because a capacity of a memory in a computing device is usually limited, when processing the IO data, the CPU has a high probability of performing the swap-in/swap-out operation on the peripheral data and the memory data. This affects data access efficiency.

### SUMMARY

This application provides a data access method. In the method, a memory expansion card shields a difference between bus protocols, and provides a computing device with internal memory space converted from external memory space, so that a processor of the computing device can access an external memory in the same way as accessing a memory, and does not need to perform a swap-in/swap-out operation, thereby improving data access efficiency. This application further provides an apparatus corresponding to the foregoing method, a memory expansion card, a data access system, a computer-readable storage medium, and a computer program product.

According to a first aspect, this application provides a data access method. The method may be performed by a memory expansion card. Specifically, the memory expansion card receives a first data access request generated by a computing device based on an internal bus protocol. The internal bus protocol includes a bus protocol for accessing internal memory space of the computing device, and the first data access request includes a virtual address in the internal memory space. Then, the memory expansion card performs protocol conversion on the first data access request to obtain a second data access request in an external bus protocol format. The external bus protocol includes a bus protocol for accessing external memory space of the computing device, and the second data access request includes a physical address in the external memory space. The memory expansion card accesses the external memory space based on the second data access request.

In the method, the memory expansion card may shield a difference between the bus protocols, and provide the internal memory space for the computing device, for example, internal memory space converted from the external memory space. In this way, the computing device can access an external memory without swapping data into a memory of the computing device, thereby improving data access efficiency of the computing device.

In some possible implementations, the virtual address in the internal memory space is a first virtual address visible to the computing device. Based on this, the memory expansion card may first convert the first virtual address visible to the computing device into a second virtual address visible to the memory expansion card, and then convert the second virtual address into the physical address in the external memory space based on a mapping relationship between a virtual address and a physical address in an index.

The memory expansion card may access the external memory space by the foregoing address conversion, and the computing device may obtain an access result from the memory expansion card without performing a swap-in/swap-out operation, thereby improving data access efficiency.

An example in which the first data access request is used to query data is used for description. The first data access request includes the first virtual address visible to the computing device. The memory expansion card may convert the first virtual address into the second virtual address visible to the memory expansion card, and then convert the second virtual address into the physical address in the external memory space based on the mapping relationship between the virtual address and the physical address in the index. In this way, the memory expansion card may access the external memory space based on the physical address. After reading the data, the memory expansion card may write the data into a memory of the memory expansion card. The computing device may read the memory of the memory expansion card via an internal bus, to obtain corresponding data. In this process, the computing device does not need to perform the swap-in/swap-out operation, thereby improving the data access efficiency.

In some possible implementations, the external memory space includes at least one of local external memory space and remote external memory space. The remote external memory space may be memory space corresponding to the external memory that is connected to a component such as a processor of the computing device over a network, and the local external memory space may be memory space corresponding to the external memory that is directly connected to the component such as the processor of the computing device via the bus. When the external memory space includes the remote external memory space, the memory expansion card may access the remote external memory space through remote direct memory access RDMA based on the second data access request.

In this way, the memory expansion card may not only be configured to expand a local memory capacity, but also may expand a remote memory capacity by a cross-node (for example, cross-computing device) expansion method, to meet different service requirements.

In some possible implementations, the internal bus protocol includes any one of a peripheral component interconnect PCI protocol, a peripheral component interconnect express PCI-E protocol, an Intel^{™} quick path interconnect QPI protocol, or a universal bus UB protocol, and the external bus protocol includes any one of a small computer system interface SCSI or a serial attached small computer system interface SAS.

In the method, the memory expansion card may use a corresponding internal bus protocol and external bus protocol to perform data access based on an actual requirement, and has high availability.

In some possible implementations, the computing device maintains at least one request queue, where the request queue is used to temporarily store the data access request. The processor of the computing device may include a plurality of cores, and each core may correspond to one request queue. Based on this, a quantity of request queues may be equal to a quantity of cores. For any request queue, when the request queue includes processes or threads corresponding to a plurality of data access requests, the computing device (specifically, a core of the processor of the computing device) may perform the processes or threads corresponding to the plurality of data access requests including the first data access request in a synchronous manner.

In this way, a quantity of times of creating, switching, and destroying a process/thread can be greatly reduced, and computing efficiency of the computing device can be improved. In addition, because a process/thread switching time is reduced, and a transmission time delay in IO processing is shortened, performance of a distributed computing cluster and a distributed storage cluster can be improved.

In some possible implementations, the memory expansion card is integrated into the computing device or is inserted into the computing device in a hot swap manner.

When the memory expansion card is integrated into the computing device, the memory expansion card may be started as the computing device is started, to implement automatic expansion of a memory capacity, improve data access efficiency of the computing device, and improve user experience without requiring a manual operation of a user. The memory expansion card may also be used as a hot swap component, and is inserted into the computing device in the hot swap manner, so that the memory capacity can be expanded on demand, thereby avoiding a waste of resources.

In some possible implementations, the memory expansion card includes a redundant array of independent disks. The redundant array of independent disks can implement redundancy calculation on data, thereby ensuring data accuracy and security and meeting service requirements.

According to a second aspect, this application provides a data access apparatus. The apparatus includes:
a communication module, configured to receive a first data access request generated by a computing device based on an internal bus protocol, where the internal bus protocol includes a bus protocol for accessing internal memory space of the computing device, and the first data access request includes a virtual address in the internal memory space;
a conversion module, configured to perform protocol conversion on the first data access request to obtain a second data access request in an external bus protocol format, where the external bus protocol includes a bus protocol for accessing external memory space of the computing device, and the second data access request includes a physical address in the external memory space; and
an access module, configured to access the external memory space based on the second data access request.

In some possible implementations, the virtual address in the internal memory space is a first virtual address visible to the computing device, and the conversion module is further configured to:
convert the first virtual address visible to the computing device into a second virtual address visible to the memory expansion card; and
convert the second virtual address into the physical address in the external memory space based on a mapping relationship between a virtual address and a physical address in an index.

In some possible implementations, the external memory space includes at least one of local external memory space and remote external memory space; and
the access module is specifically configured to:
when the external memory space includes the remote external memory space, access the remote external memory space through remote direct memory access RDMA based on the second data access request.

In some possible implementations, the internal bus protocol includes any one of a peripheral component interconnect PCI protocol, a peripheral component interconnect express PCI-E protocol, an Intel^{™} quick path interconnect QPI protocol, or a universal bus UB protocol, and the external bus protocol includes any one of a small computer system interface SCSI or a serial attached small computer system interface SAS.

According to a third aspect, this application provides a memory expansion card. The memory expansion card includes a processor and a memory. The memory may be, for example, a memory, the memory stores computer-readable instructions, and the processor executes the computer-readable instructions, to enable the memory expansion card to perform the data access method according to the first aspect or any one of the implementations of the first aspect of this application.

According to a fourth aspect, this application provides a data access system. The data access system includes a computing device and a memory expansion card.

The computing device is configured to generate a first data access request based on an internal bus protocol. The internal bus protocol includes a bus protocol for accessing internal memory space of the computing device, and the first data access request includes a virtual address in the internal memory space.

The memory expansion card is configured to receive the first data access request sent by the computing device, perform protocol conversion on the first data access request to obtain a second data access request in an external bus protocol format, and access external memory space based on the second data access request. The external bus protocol includes a bus protocol for accessing the external memory space of the computing device, and the second data access request includes a physical address in the external memory space.

According to a fifth aspect, this application provides a computer-readable storage medium. The computer-readable storage medium stores instructions, and the instructions indicate a memory expansion card to perform the data access method according to the first aspect or any one of the implementations of the first aspect.

According to a sixth aspect, this application provides a computer program product including instructions. When the computer program product is run on a memory expansion card, the memory expansion card is enabled to perform the data access method according to the first aspect or any one of the implementations of the first aspect.

In this application, based on the implementations according to the foregoing aspects, the implementations may be further combined to provide more implementations.

### BRIEF DESCRIPTION OF DRAWINGS

To describe the technical methods in embodiments of this application more clearly, the following briefly describes the accompanying drawings that need to be used in the embodiments.
FIG. 1 is a schematic diagram of a structure of a computing device according to an embodiment of this application;
FIG. 2 is a schematic diagram of a pyramid storage system according to an embodiment of this application;
FIG. 3 is a schematic diagram of an architecture of a data access system according to an embodiment of this application;
FIG. 4 is a schematic diagram of a structure of a memory expansion card according to an embodiment of this application;
FIG. 5 is a flowchart of a memory expansion method according to an embodiment of this application;
FIG. 6 is a flowchart of a data access method according to an embodiment of this application; and
FIG. 7 is a schematic diagram of a structure of a data access apparatus according to an embodiment of this application.

### DESCRIPTION OF EMBODIMENTS

The terms "first" and "second" in embodiments of this application are merely intended for a purpose of description, and shall not be understood as an indication or implication of relative importance or implicit indication of a quantity of indicated technical features. Therefore, a feature limited by "first" or "second" may explicitly or implicitly include one or more features.

In many applications, a computing device on which an application is deployed needs to access data, to implement a function of the application. For example, a computing device on which a database application is deployed needs to perform a large amount of data access, to update data in a database, or respond to a data query request and return a query result to a user. For another example, a computing device on which a web application is deployed needs to perform a large amount of data access, to return requested content to a user.

The computing device may be a server or a terminal. The terminal includes but is not limited to user equipment such as a desktop computer, a notebook computer, and a smartphone. For ease of understanding, the following describes a structure of the computing device.

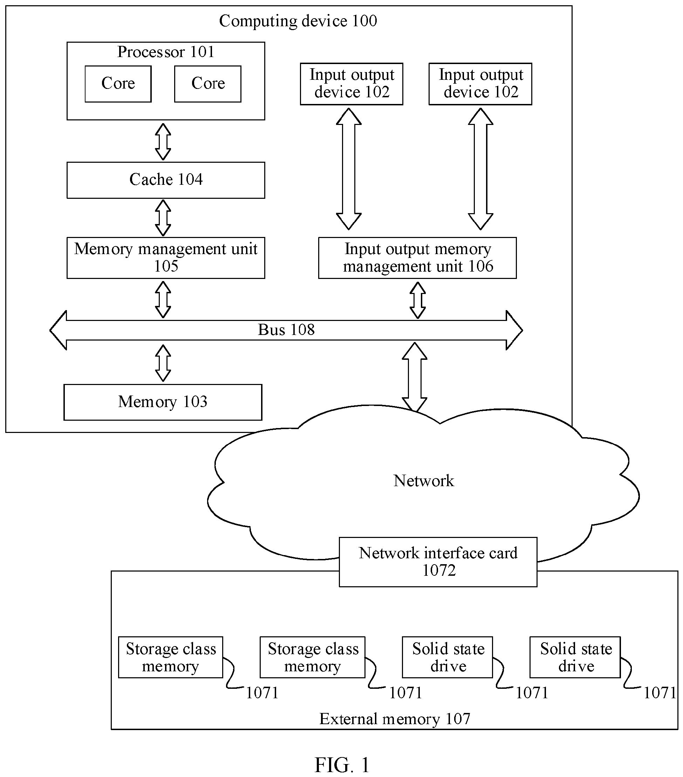

Refer to a schematic diagram of a structure of a computing device shown in FIG. 1. The computing device 100 includes a processor 101, an input output device (input output device, IO device) 102, a memory 103, a cache 104, a memory management unit (memory management unit, MMU) 105, an input output memory management unit (input output management unit, IOMMU) 106, an external memory 107, and a bus 108.

The processor 101 includes at least one core (core). The core is also referred to as a computing engine. Each core may independently perform a task. When the processor 101 includes a plurality of cores, tasks from an application may be divided, so that the application can make full use of the plurality of cores, and perform more tasks within a specific time. In this embodiment, the processor 101 may be a main processor, for example, a CPU.

The input output device 102 refers to a hardware device that has a data input capability and/or a data output capability. The input output device 102 may be classified into an input device and an output device. The input device may include a device such as a mouse, a keyboard, a joystick, a stylus, and a microphone, and the output device may include a device such as a display and a speaker.

The memory 103 is also referred to as an internal memory or a main memory, and is configured to temporarily store operation data in the processor 101. Further, the memory 103 is further configured to temporarily store data exchanged with the external memory 107. The memory 103 may be generally implemented by using a storage medium such as a dynamic random access memory DRAM or a static random access memory (static random access memory, SRAM).

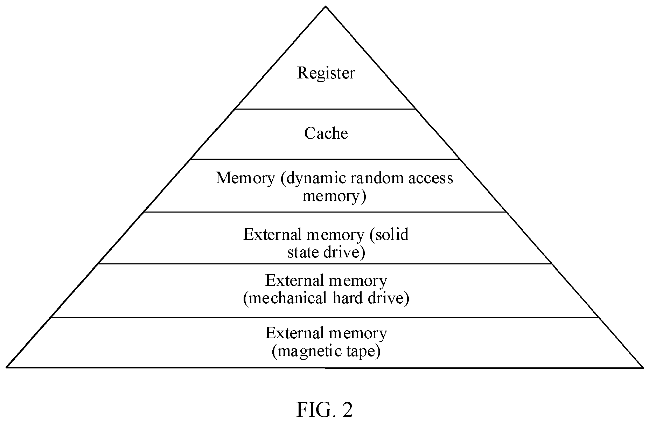

The cache 104 (which is a processor cache, for example, a CPU cache in this embodiment) is a component configured to reduce an average time required for the processor 101 to access the memory 103. Refer to FIG. 2. In a pyramid storage system, the cache 104 is located at a second layer from top to bottom, is only second to a register (not shown in FIG. 1) of the processor 101, and is higher than the memory 103 (the memory 103 is located at a third layer from top to bottom). Generally, a capacity of the cache 104 is far less than that of the memory 103, but an access speed may be close to a frequency of the processor 101.

The memory management unit 105 is computer hardware configured to process a data access request. The memory management unit 105 is specifically configured to perform mapping on a virtual address (virtual address, VA) in the data access request. The memory management unit 105 may intercept a data access request sent by the core of the processor 101, and map (or translate) a virtual address in the data access request to a physical address (physical address, PA), to access the memory 103 based on the physical address.

The input output memory management unit 106 is essentially a memory management unit. Similar to that the memory management unit 105 maps a virtual address visible to the processor 101 to a physical address, the input output memory management unit 106 is configured to map a virtual address (which may also be referred to as a device address or an IO address) visible to the input output device 102 to a physical address.

The external memory 107 is also referred to as an external memory or a secondary memory, and is usually configured to persistently store data. For example, the external memory 107 may persistently store the operation data in the processor 101. Even if a power supply is abnormal, data that has been written into the external memory 107 can still be stored, thereby avoiding data loss. During a specific implementation, the external memory 107 includes at least one non-volatile memory 1071. When the external memory includes a plurality of non-volatile memories, the plurality of non-volatile memories may be of a same type, or may be of different types. For example, in the example of FIG. 1, the external memory 107 may include two types of non-volatile memories, for example, a storage class memory (storage class memory, SCM) and a solid state drive (solid state drive, SSD).

The bus 108 is configured to connect all functional components of the computing device 100. The bus 108 is a public communication trunk for transmitting information between various functional components of the computing device 100. The bus 108 may be a transmission bundle formed by conducting wires. Based on different connection objects, the bus 108 may be further classified into an internal bus and an external bus.

The internal bus uses an internal bus protocol to transmit information. The internal bus protocol includes a bus protocol for accessing internal memory space of the computing device 100. The external bus uses an external bus protocol to transmit information. The external bus protocol includes a bus protocol for accessing external memory space of the computing device 100. The internal memory space refers to an address space of the memory, and the external memory space refers to an address space of the external memory.

In some embodiments, the internal bus protocol includes but is not limited to a peripheral component interconnect (peripheral component interconnect, PCI) bus, a peripheral component interconnect express (PCI Express, PCI-E) protocol, an Intel^{™} quick path interconnect (Intel^{™} Quick Path Interconnect, QPI) protocol, and a universal bus (universal bus, UB) protocol. The external bus protocol includes but is not limited to a small computer system interface (small computer system interface, SCSI) protocol or a serial attached small computer system interface (Serial Attached SCSI, SAS) protocol.

It should be noted that the computing device 100 shown in FIG. 1 is described by using an example in which the external memory 107 is a remote external memory. As shown in FIG. 1, the external memory 107 includes a network interface card 1072. The network interface card 1072 may be, for example, a smart NIC network interface card (that is, a network adapter card). The external memory 107 accesses a network via the network interface card 1072, and is further connected to another component of the computing device 100 via the network. The network may be a wired communication network, for example, an optical fiber communication network, or may be a wireless communication network, for example, a wireless local area network (wireless local area network, WLAN) or the fifth generation (the fifth generation, 5G) mobile communication network.

In some possible implementations, the external memory 107 of the computing device 100 may also be a local external memory, and another component of the computing device 100, for example, the processor 101, may be connected to the local external memory via the bus 108. In some other possible implementations, the computing device 100 may include both the remote external memory and the local external memory. In addition, embodiments of this application are applicable to a centralized storage scenario or a distributed storage scenario. This is not limited in this embodiment.

In the computing device 100 shown in FIG. 1, when processing IO data, the processor 101 processes data in the memory 103. When to-be-processed data is not in the memory 103, a data swap-in/swap-out operation further needs to be performed. For example, some data in the memory 103 is written into the external memory 107, and the to-be-processed data is read from the external memory 107 into the memory 103. Because a capacity of the memory 103 in the computing device 100 is usually limited, when processing the IO data, the processor 101 has a high probability of performing the data swap-in/swap-out operation. This affects data access efficiency.

In view of this, embodiments of this application provide a data access method. The method may be performed by a memory expansion card. The memory expansion card may convert the external memory space of the computing device 100 into the internal memory space, so that the computing device 100 accesses the external memory 107 in the same way as accessing the memory 103. That is, the processor 101 of the computing device 100 can access the external memory 107 without swapping data in the external memory 107 into the memory 103, which is equivalent to expanding the capacity of the memory 103.

Specifically, the memory expansion card receives a first data access request generated by the computing device 100 based on the internal bus protocol, where the internal bus protocol includes the bus protocol for accessing the internal memory space of the computing device 100, and the first data access request includes a virtual address in the internal memory space. Then, the memory expansion card performs protocol conversion on the first data access request to obtain a second data access request in an external bus protocol format, where the external bus protocol includes the bus protocol for accessing the external memory space of the computing device. The second data access request includes a physical address in the external memory space, and the memory expansion card accesses the external memory space based on the second data access request.

In the method, the memory expansion card may shield a difference between the bus protocols, and provide the internal memory space for the computing device 100, for example, internal memory space converted from the external memory space. The computing device 100 can access the external memory 107 without swapping data into the memory 103 of the computing device 100, thereby improving data access efficiency of the computing device 100.

Further, because the computing device 100 may access the external memory 107 in the same way as accessing the memory 103, there is a high probability that the computing device 100 prefetches required data, and the computing device 100 does not need to switch a process or a thread. In this way, overheads generated during process or thread switching can be reduced, and computing efficiency can be improved.

To make the technical solutions of this application clearer and easier to understand, the following describes a system architecture in embodiments of this application with reference to the accompanying drawings.

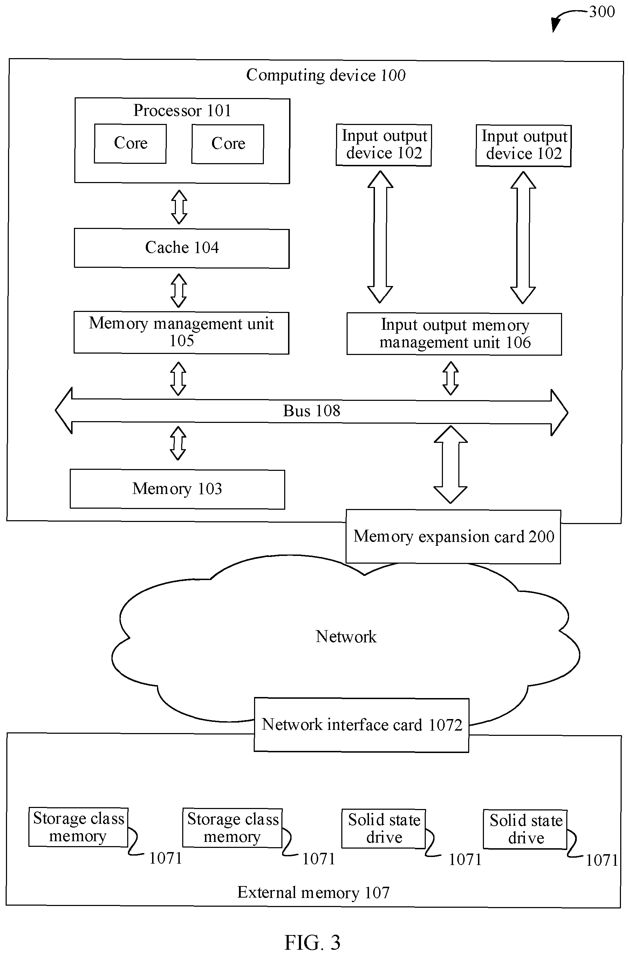

Refer to a schematic diagram of an architecture of a data access system shown in FIG. 3. The data access system 300 includes a computing device 100 and a memory expansion card 200. The memory expansion card 200 is separately connected to a processor 101 and an external memory 107 of the computing device 100. The computing device 100 may be the structure shown in FIG. 1, or may be another structure. For example, the computing device 100 may be a structure including a local external memory. When the computing device 100 uses the structure shown in FIG. 1, the memory expansion card 200 may be connected to a component such as the processor 101 of the computing device 100 via a bus 108, and connected to the external memory 107 of the computing device 100 via a network.

The computing device 100 may generate a first data access request based on an internal bus protocol, and then send the first data access request to the memory expansion card 200. The memory expansion card 200 may perform protocol conversion on the first data access request to obtain a second data access request in an external bus protocol format, and then the memory expansion card 200 accesses external memory space based on the second data access request. In this way, the computing device 100 may access the external memory space through the memory expansion card 200.

The following describes a hardware structure of the memory expansion card 200 with reference to the accompanying drawings.

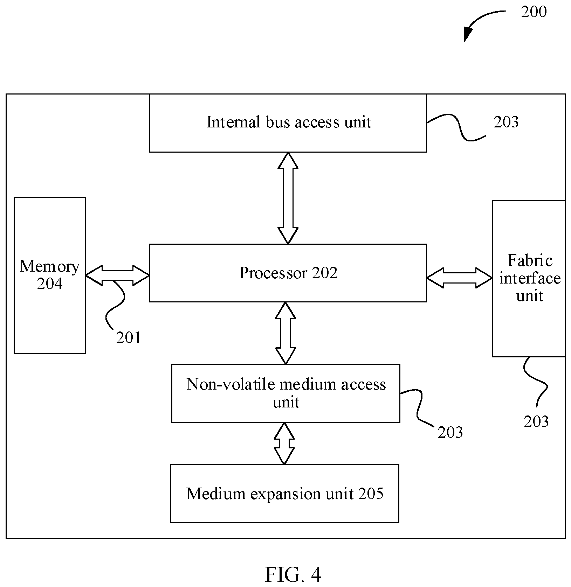

Refer to a diagram of a structure of hardware of a memory expansion card 200 shown in FIG. 4. The memory expansion card 200 includes a bus 201, a processor 202, a communication interface 203, and a memory 204.

Similar to the bus 108 of the computing device 100, a bus 201 of the memory expansion card 200 is a public communication trunk for transmitting information between various functional components of the memory expansion card. The bus 201 of the memory expansion card 200 may be classified into an internal bus and an external bus. The internal bus uses an internal bus protocol, and the external bus uses an external bus protocol. It should be noted that the internal bus protocol used by the computing device 100 may be the same as or different from the internal bus protocol used by the memory expansion card 200.

The processor 202 is mainly configured to assist the computing device 100 in accelerating data access. Therefore, the processor 202 may also be referred to as a coprocessor or a core acceleration unit. The processor 202 may be, for example, a data processing unit (data processing unit, DPU).

The communication interface 203 may include an interface configured to communicate with the processor 101 of the computing device 100. The interface may be configured to receive a first data access request generated by the computing device 100 based on the internal bus protocol, and return an access result corresponding to the first data access request to the computing device 100. Based on this, the interface may also be referred to as an internal bus protocol access unit.

The memory 204 is configured to provide a cache service required by a corresponding computing function for the processor 202 (a local processor of the memory expansion card 200), and provide direct memory access space for the processor 101 of the computing device 100, to expand a memory capacity. The memory 204 may use a storage medium such as a double data rate synchronous dynamic random access memory (double data rate synchronous dynamic random access memory, DDR SDRAM, DDR for short) or an Apache pass (Apache Pass, AEP).

In some possible implementations, the communication interface 203 may further include an interface used for communication with a non-volatile storage medium (also referred to as a non-volatile medium), and the interface is also referred to as a non-volatile medium access unit. The non-volatile medium access unit may complete conversion between the internal bus protocol and the external bus protocol. For example, if the internal bus protocol is PCI-E and the external bus protocol is SAS, conversion between the PCI-E protocol and the SAS protocol may be completed, to implement access to the non-volatile storage medium. In addition, the non-volatile medium access unit may further provide a disk sheet access function. For example, if both the internal bus protocol and the external bus protocol are PCI-E, corresponding PCI-E IO extension, clock, out-of-band management functions, and the like need to be provided. When a physical resource provided by the non-volatile medium access unit cannot meet a medium disk sheet access requirement, a medium expansion unit 205 may be further used to expand a corresponding resource, to meet the disk sheet access requirement.

The memory 204 may further have a short-term power outage backup power capability. For example, the memory 204 has a battery. Therefore, when a power supply is abnormal, the battery may be used to perform short-term backup power, so that data in the memory 204 may be transferred to the non-volatile medium for data protection. When the power supply is restored, the data may be restored to the memory 204.

In some possible implementations, the communication interface 203 may further include a fabric (fabric) interface unit. Specifically, the fabric interface unit may complete conversion between the internal bus protocol and an external transmission protocol. The external transmission protocol includes but is not limited to fiber channel (fiber channel, FC), Ethernet (Ethernet, ETH), InfiniBand (InfiniBand, IB), or remote direct memory access over converged Ethernet (RDMA over Converged Ethernet, RoCE). By performing the foregoing protocol conversion, the fabric interface unit may implement cross-node (for example, cross-computing device) memory access, and a volatile medium and a non-volatile medium of distributed storage or centralized storage.

The fabric interface unit may further report the medium as a different type of device for access by the processor 101 based on an attribute of a cross-node medium. For example, if the cross-node medium has characteristics of a low delay and volatility, a volatile memory access interface is provided for the processor 101. For another example, if the cross-node medium has characteristics of a low delay and non-volatility, a non-volatile memory access interface is provided for the processor 101. For another example, if the cross-node medium has characteristics of a large capacity and a high delay, a common medium access interface is provided for the processor 101.

The memory expansion card 200 may be integrated into the computing device 100, or may be inserted into the computing device 100 in a hot swap manner, to expand the memory capacity. In some other possible implementations, when a capacity of a storage medium that is externally connected to the memory expansion card 200 via the fabric interface unit changes, the memory capacity may also change. When the memory capacity changes, the computing device 100 may be reported, for example, an operating system (operating system, OS) run on the computing device 100 is reported, to implement memory semantic access, that is, external memory space provided by an external storage medium is converted into the internal memory space, to enable the computing device 100 to perform accessing in a form of accessing the memory. In some possible implementations, the memory expansion card 200 may be further removed to perform memory semantic deletion.

For ease of understanding, the following describes a memory expansion process in detail with reference to the accompanying drawings.

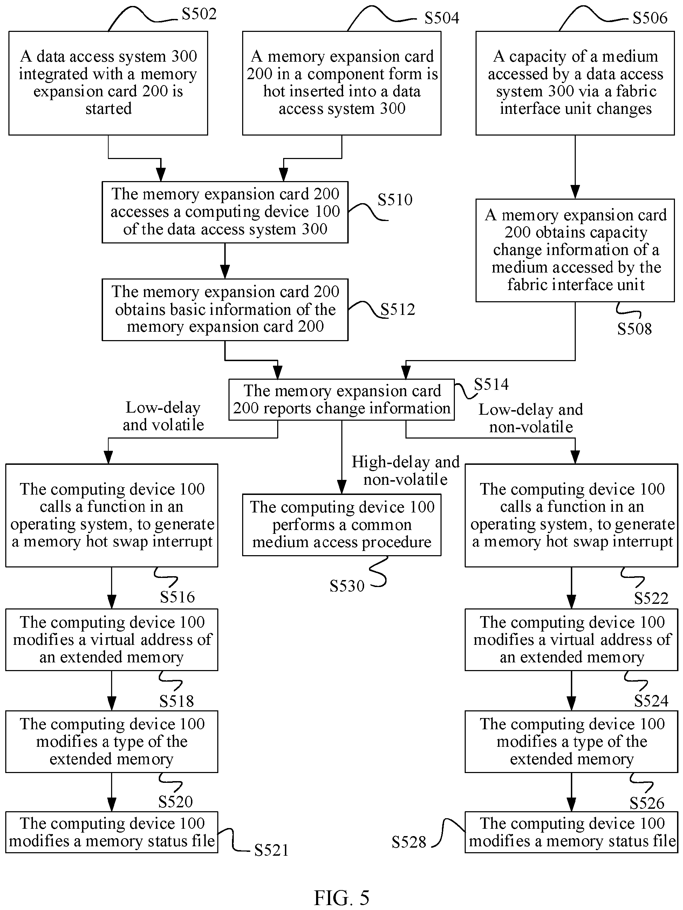

Refer to a flowchart of a memory expansion process shown in FIG. 5. The process specifically includes the following steps.

S502. A data access system 300 integrated with a memory expansion card 200 is started, and then S510 is performed.

S504. A memory expansion card 200 in a component form is hot inserted into a data access system 300, and then S510 is performed.

S506. A capacity of a medium accessed by a data access system 300 via a fabric interface unit changes.

It should be noted that, S502 to S506 are several implementations of memory extension. In an actual application, one or more of the implementations may be selected, which is not limited in this embodiment.

S508. A memory expansion card 200 obtains capacity change information of a medium accessed by the fabric interface unit, and then performs S514.

S510. The memory expansion card 200 accesses a computing device 100 of the data access system 300.

S512. The memory expansion card 200 obtains basic information of the memory expansion card 200.

The basic information of the memory expansion card 200 includes at least one of a storage characteristic, an access characteristic, and the like. The storage characteristic may include a storage capacity, volatility, or non-volatility. The access characteristics may include a low delay or high delay.

S514. The memory expansion card 200 reports change information. When the change information indicates that the newly added memory expansion card 200 is a low-delay volatile medium, or a low-delay volatile medium is added to the medium accessed by the fabric interface unit, S516 is performed. When the change information indicates that the newly added memory expansion card 200 is a low-delay non-volatile medium, or a low-delay non-volatile medium is added to the medium accessed by the fabric interface unit, S522 is performed. When the change information indicates that the newly added memory expansion card 200 is a high-delay non-volatile medium, or a high-delay non-volatile medium is added to the medium accessed by the fabric interface unit, S530 is performed.

The change information may be, for example, the capacity change information of the medium accessed by the fabric interface unit in S508, or the basic information of the memory expansion card 200 newly added in S512.

S516. The computing device 100 calls a function in an operating system, to generate a memory hot swap interrupt.

Specifically, the computing device 100 may call a CONFIG ARCH MEMORY PROBE function in Linux^{™}, to generate the memory hot swap interrupt.

S518. The computing device 100 modifies a virtual address of an extended memory.

The extended memory may be a memory provided by the newly added memory expansion card 200, or a memory extended by a change of the medium accessed by the fabric interface unit. The computing device 100 may modify a starting address and a memory capacity of the extended memory, to modify the virtual address of the extended memory.

S520. The computing device 100 modifies a type of the extended memory, and then performs S521.

Specifically, because the reported change information indicates that the newly added memory expansion card 200 is a volatile medium, or a volatile medium is newly added to the medium accessed by the fabric interface unit, the computing device 100 may modify the type of the extended memory to RAM.

S521. The computing device 100 modifies a memory status file, to change the extended memory to an online mode.

Specifically, the computing device 100 may modify a "auto_online_blocks" file of the Linux^{™}, and modify the extended memory to the online (online) mode. In some other embodiments, when the extended memory is removed, the extended memory may be modified to an offline (offline) mode.

S522. The computing device 100 calls a function in an operating system, to generate a memory hot swap interrupt.

S524. The computing device 100 modifies a virtual address of an extended memory.

For specific implementations of S522 and S524, refer to related content descriptions of S516 and S518. Details are not described herein again.

S526. The computing device 100 modifies a type of the extended memory, and then performs S528.

Specifically, because the reported change information indicates that the newly added memory expansion card 200 is a non-volatile medium, or a non-volatile medium is newly added to the medium accessed by the fabric interface unit, the computing device 100 may modify the type of the extended memory to NVRAM.

It should be noted that the OS may also agree on a special descriptor, to indicate information such as the type of the memory.

S528. The computing device 100 modifies the memory status file, to change the extended memory to the online mode.

For a specific implementation of modifying the memory status file by the computing device 100, refer to S521. Details are not described in this embodiment again.

S530. The computing device 100 performs a common medium access procedure.

The common medium specifically refers to a non-volatile medium with a high delay. A process in which the computing device 100 performs common medium access is specifically using the high-delay non-volatile medium as an external memory. In this way, the computing device 100 may deliver a data access request to the memory expansion card 200, and access data in the external memory by the memory expansion card 200 without swapping data into a memory 103 of the computing device 100.

FIG. 5 describes in detail a process of accessing the memory expansion card 200, and the following describes in detail a data access method after memory expansion.

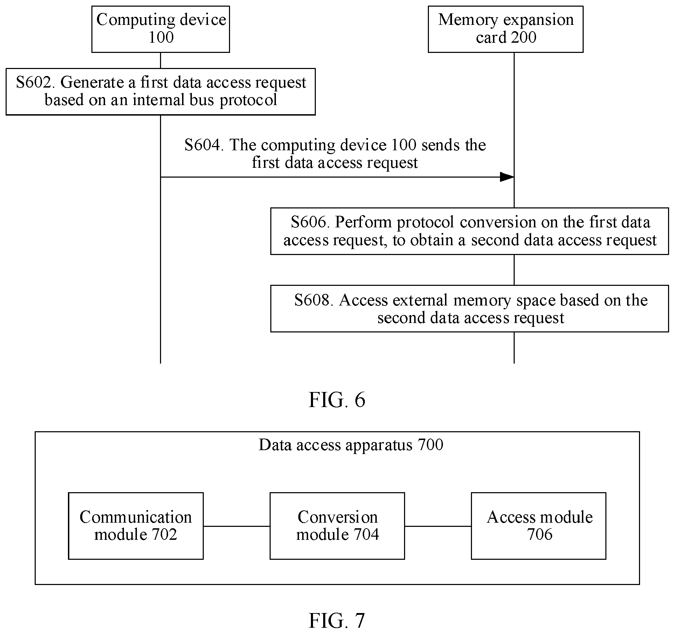

Refer to a flowchart of a data access method shown in FIG. 6. The method includes the following steps.

S602. A computing device 100 generates a first data access request based on an internal bus protocol.

S604. The computing device 100 sends the first data access request to a memory expansion card 200.

A processor 101 of the computing device 100 may initiate the first data access request based on the internal bus protocol. The first data access request may be used to request to add data, delete data, search for data, or modify data. The first data access request may include an access address, and the access address may be, for example, a virtual address in internal memory space.

During a specific implementation, the first data access request further includes a command (command, CMD), and the command may be, for example, a read command or a write command. When the first data access request is used to add data or modify data, the first data access request further includes the write command. When the first data access request includes the write command, the first data access request further carries to-be-written data.

When data requested by the first data access request is not hit in a memory 103 of the computing device 100, the computing device 100 may send the first data access request to the memory expansion card 200, to access data in an external memory 107 by the memory expansion card 200.

S606. The memory expansion card 200 performs protocol conversion on the first data access request, to obtain a second data access request in an external bus protocol format.

Specifically, the internal bus protocol includes any one or more of a PCI protocol, a PCI-E protocol, a QPI protocol, and a UB protocol, and the external bus protocol includes one or more of an SCSI protocol and a SAS protocol. The memory expansion card 200 may unpack a data packet of the first data access request to obtain content such as the command and the access address, and then encapsulate the content based on a format specified in the external bus protocol, to perform protocol conversion on the first data access request, and obtain the second data access request in the external bus protocol format.

It should be noted that the external bus protocol is used to access external memory space. Based on this, the second data access request includes a physical address in the external memory space. The physical address may be obtained by the memory expansion card 200 in a manner of converting the virtual address of the internal memory space in the first data access request.

The access address in the first data access request generated by the computing device 100 via the processor 101 is a virtual address. Address space seen by the processor 101 is virtual memory, and the address for accessing the virtual memory is the virtual address. The address that corresponds to the virtual address is the physical address. The physical address is also referred to as a real address (real address). The physical address may be, for example, an address of the external memory 107 of the computing device 100.

In embodiments of this application, the processor 101 in the computing device 100 may perform unified addressing on the memory 103 of the computing device 100, a storage medium (for example, a memory and a persistent medium) of the memory expansion card 200, and a device such as the external memory 107 (for example, a persistent medium such as a hard disk drive) mounted to the memory expansion card 200, to form virtual address space. The virtual address space is internal memory space that can be accessed by the processor 101. Similarly, the memory expansion card 200 may perform unified addressing on the storage medium (for example, a memory 204 and a low-delay non-volatile medium) of the memory expansion card 200 and the external memory 107 mounted to the memory expansion card 200, to form the virtual address space. The virtual address space is internal memory space that can be accessed by a processor 202 of the memory expansion card 200.

Based on this, the virtual address in the first data access request is a first virtual address visible to the computing device 100. The memory expansion card 200 may convert the first virtual address visible to the computing device 100 into a second virtual address visible to the memory expansion card 200. The memory expansion card 200 maintains an index. The index includes a mapping relationship between the virtual address and the physical address. The memory expansion card 200 may convert the second virtual address into the physical address in the external memory space based on the mapping relationship between the virtual address and the physical address in the index.

S608. The memory expansion card 200 accesses the external memory space based on the second data access request.

Specifically, the memory expansion card 200 may access the external memory space through an external bus based on a physical address in the second data access request. The memory expansion card 200 may further obtain an access result, and return the access result to the computing device 100. When the first data access request is used to search for data, the access result may be found data. When the first data access request is used to add data, delete data, or modify data, the access result may be an addition success notification, a deletion success notification, or a modification success notification.

In some possible implementations, the external memory space includes at least one of local external memory space and remote external memory space. When the external memory space includes the remote external memory space, the memory expansion card 200 may access the remote external memory space through remote direct memory access (remote direct memory access, RDMA) based on the second data access request. Specifically, after performing protocol conversion to obtain the second data access request, the processor 202 of the memory expansion card 200 may send the second data access request to a fabric interface unit, and the fabric interface unit completes remote external memory access.

When the index changes because the memory expansion card 200 accesses the external memory space, for example, when the index changes because the memory expansion card 200 adds data to the external memory space, modifies data, or deletes data, the memory expansion card 200 may further update the index.

The memory expansion card 200 adds data to or modifies data in the external memory space, and specifically, performs a write operation of persistent data in the external memory space. Based on this, before data is written or after data is written, the memory expansion card 200 may perform deduplication/compression on the data, to reduce a data amount. Correspondingly, that the memory expansion card 200 queries data from the external memory space may be that the memory expansion card performs a read operation in the external memory space. After reading the data, the memory expansion card 200 may reconstruct/decompress the data to restore the data. It should be noted that, the memory expansion card 200 may choose whether to perform deduplication/compression based on an actual service requirement. For example, the memory expansion card 200 may choose not to perform deduplication/compression when a service is busy, and perform deduplication/compression when the service is idle.

In some possible implementations, before data is written or after data is written, the memory expansion card 200 performs redundancy calculation on the data, to ensure data reliability and correctness. The performing redundancy calculation on the data includes implementing redundancy calculation by a redundant array of independent disks (redundant array of independent disks, RAID), or implementing redundancy calculation by erasure code (erasure code, EC).

For example, EC implements redundancy calculation. The memory expansion card 200 may complete data slicing and redundancy calculation of data based on the actual service requirement and a configured data redundancy policy, and then distribute a plurality of data blocks after redundancy to different types of medium space. The medium space includes medium space provided by the fabric interface unit. That is, the memory expansion card 200 may distribute the plurality of data blocks to the current computing device 100 and another computing device 100. Both the current computing device 100 and the another computing device 100 have a non-volatile storage medium.

Because the memory expansion card 200 may convert the external memory space into the internal memory space, the computing device 100 accesses the external memory 107 in the same way as accessing the memory 103. The computing device 100 may use a synchronous IO access manner, to reduce a quantity of times of creating, switching, and destroying a process/thread, and improve computing efficiency of the processor 101 in the computing device 100. Specifically, the computing device 100 may maintain at least one request queue. A quantity of request queues may be corresponding to a quantity of cores of the processor 101 in the computing device 100, for example, may be equal to the quantity of cores. When the request queue includes processes or threads corresponding to a plurality of data access requests, where the plurality of data access requests include the first data access request, and the computing device 100 may perform the processes or threads corresponding to the plurality of data access requests in a synchronous manner.

Based on the foregoing content description, embodiments of this application provide a data access method. In the method, the memory expansion card 200 may shield a difference between the bus protocols, and provide the internal memory space for the computing device 100, for example, internal memory space converted from the external memory space. The computing device 100 can access the external memory 107 through the memory expansion card 200 without swapping data into the memory 103 of the computing device 100, thereby improving data access efficiency of the computing device 100. In addition, the computing device 100 has a high probability of prefetching required data, and does not need to switch a process or a thread. In this way, overheads generated during process or thread switching can be reduced, computing resources occupied by process or thread switching can be reduced, and computing efficiency can be improved.

The embodiment shown in FIG. 6 is described by using an example in which data requested to be accessed is in the external memory 107 of the computing device 100. In some possible implementations, the memory expansion card 200 may first determine whether the memory 204 of the memory expansion card 200 includes the data requested to be accessed. If yes, the memory expansion card 200 may access the memory 204 of the memory expansion card 200. If no, the memory expansion card 200 accesses the external memory 107 of the computing device 100.

When the non-volatile storage medium (for example, a low-delay non-volatile storage medium) is connected to the memory expansion card 200, if the memory 204 of the memory expansion card 200 does not include the data requested to be accessed, the memory expansion card 200 may further determine whether the non-volatile storage medium of the memory expansion card 200 includes the data requested to be accessed. If yes, the memory expansion card 200 may access the non-volatile storage medium. If no, the memory expansion card 200 accesses the external memory 107 of the computing device 100.

When accessing the memory 204 of the memory expansion card 200 or the non-volatile storage medium of the memory expansion card 200, the memory expansion card 200 may perform protocol conversion on the first data access request, and specifically, convert an internal bus protocol of the computing device 100 into an internal bus protocol of the memory expansion card 200, so that the memory expansion card 200 accesses the memory 204 or the non-volatile storage medium based on the converted internal bus protocol. The memory expansion card 200 performs protocol conversion to implement semantic conversion, for example, converts memory semantics of the processor 101 into data execution semantics of the memory expansion card 200. Correspondingly, after accessing the memory 204 or the volatile storage medium, the memory expansion card 200 may perform semantic conversion on an access result, for example, convert a protocol format of the access result into the internal bus protocol of the computing device 100, so that the computing device 100 can obtain the access result via an internal bus.

The non-volatile storage medium of the memory expansion card 200 may include one or more of a local non-volatile storage medium and a remote non-volatile storage medium. When the data requested to be accessed is in the remote non-volatile storage medium, the memory expansion card 200 may further send a data operation request obtained through protocol conversion to the fabric interface unit. The fabric interface unit accesses the remote non-volatile storage medium by a cross-node access technology (such as RDMA), performs semantic conversion on an access result, and then returns the access result to the computing device 100 via an internal bus access unit.

In a process of accessing the memory 204 and the non-volatile storage medium of the memory expansion card 200, an index change operation (for example, an operation such as write, add, delete, or modify) of the memory expansion card 200 (for example, a raid card) is involved, and the memory expansion card 200 may modify information in the index for next query and use.

The foregoing describes in detail the data access method provided in embodiments of this application with reference to FIG. 1 to FIG. 6. The following describes an apparatus provided in the embodiments of this application with reference to the accompanying drawings.

Refer to a schematic diagram of a structure of a data access apparatus shown in FIG. 7. The apparatus 700 includes:
a communication module 702, configured to receive a first data access request generated by a computing device based on an internal bus protocol, where the internal bus protocol includes a bus protocol for accessing internal memory space of the computing device, and the first data access request includes a virtual address in the internal memory space;
a conversion module 704, configured to perform protocol conversion on the first data access request to obtain a second data access request in an external bus protocol format, where the external bus protocol includes a bus protocol for accessing external memory space of the computing device, and the second data access request includes a physical address in the external memory space; and
an access module 706, configured to access the external memory space based on the second data access request.

In some possible implementations, the virtual address in the internal memory space is a first virtual address visible to the computing device, and the conversion module 704 is further configured to:
convert the first virtual address visible to the computing device into a second virtual address visible to the memory expansion card; and
convert the second virtual address into the physical address in the external memory space based on a mapping relationship between a virtual address and a physical address in an index.

In some possible implementations, the external memory space includes at least one of local external memory space and remote external memory space; and
the access module 706 is specifically configured to:
when the external memory space includes the remote external memory space, access the remote external memory space through remote direct memory access RDMA based on the second data access request.

In some possible implementations, the internal bus protocol includes any one of a peripheral component interconnect PCI protocol, a peripheral component interconnect express PCI-E protocol, an Intel^{™} quick path interconnect QPI protocol, or a universal bus UB protocol, and the external bus protocol includes any one of a small computer system interface SCSI or a serial attached small computer system interface SAS.

A data access apparatus 500 according to embodiments of this application may correspondingly perform the methods described in the embodiments of this application. In addition, the foregoing and other operations and/or functions of the modules/units of the data access apparatus 500 are respectively used to implement corresponding procedures of the methods in the embodiment shown in FIG. 6. For brevity, details are not described herein again.

Embodiments of this application further provide a memory expansion card 200. The memory expansion card 200 is specifically configured to implement a function of the data access apparatus 700 shown in FIG. 7. For a hardware structure of the memory expansion card 200, reference may be made to related content description in FIG. 4, and details are not described herein again.

Embodiments of this application further provide a computer-readable storage medium. The computer-readable storage medium may be any usable medium that can be stored by the memory expansion card 200, or a data storage device, such as a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions, and the instructions indicate the memory expansion card 200 to perform the foregoing data access method.

Embodiments of this application further provide a computer program product. The computer program product includes one or more computer instructions. When the computer instructions are loaded and executed on the memory expansion card 200, the procedures or functions according to embodiments of this application are all or partially generated. The computer instructions may be stored in a computer-readable storage medium or may be transmitted from a computer-readable storage medium to another computer-readable storage medium. For example, the computer instructions may be transmitted from a website, computing device, or data center to another website, computing device, or data center in a wired (for example, a coaxial cable, an optical fiber, or a digital subscriber line (DSL)) or wireless (for example, infrared, radio, or microwave) manner. The computer program product may be a software installation package. When any one of the foregoing data access methods needs to be used, the computer program product may be downloaded and executed on the memory expansion card 200.

Embodiments of this application further provide a data access system. Refer to a schematic diagram of a structure of a data access system 300 shown in FIG. 3. The system 300 includes a computing device 100 and a memory expansion card 200. The computing device 100 is configured to generate a first data access request based on an internal bus protocol. The memory expansion card 200 is configured to receive the first data access request sent by the computing device 100, perform protocol conversion on the first data access request to obtain a second data access request in an external bus protocol format, and access external memory space based on the second data access request.

Descriptions of procedures or structures corresponding to the foregoing accompanying drawings have respective focuses. For a part that is not described in detail in a procedure or structure, refer to related descriptions of other procedures or structures.

## Claims

1. A data access method, wherein the method comprises:
receiving, by a memory expansion card, a first data access request generated by a computing device based on an internal bus protocol, wherein the internal bus protocol comprises a bus protocol for accessing internal memory space of the computing device, and the first data access request comprises a virtual address in the internal memory space;
performing, by the memory expansion card, protocol conversion on the first data access request to obtain a second data access request in an external bus protocol format, wherein the external bus protocol comprises a bus protocol for accessing external memory space of the computing device, and the second data access request comprises a physical address in the external memory space; and
accessing, by the memory expansion card, the external memory space based on the second data access request.

2. The method according to claim 1, wherein the virtual address in the internal memory space is a first virtual address visible to the computing device, and the method further comprises:
converting, by the memory expansion card, the first virtual address visible to the computing device into a second virtual address visible to the memory expansion card; and
converting, by the memory expansion card, the second virtual address into the physical address in the external memory space based on a mapping relationship between a virtual address and a physical address in an index.

3. The method according to claim 1 or 2, wherein the external memory space comprises at least one of a local external memory space and a remote external memory space; and
when the external memory space comprises the remote external memory space, the accessing, by the memory expansion card, the external memory space based on the second data access request comprises:
accessing, by the memory expansion card, the remote external memory space through remote direct memory access RDMA based on the second data access request.

4. The method according to any one of claims 1 to 3, wherein the internal bus protocol comprises any one of a peripheral component interconnect PCI protocol, a peripheral component interconnect express PCI-E protocol, an Intel^{™} quick path interconnect QPI protocol, or a universal bus UB protocol, and the external bus protocol comprises any one of a small computer system interface SCSI or a serial attached small computer system interface SAS.

5. The method according to any one of claims 1 to 4, wherein the computing device maintains at least one request queue, and when the request queue comprises processes or threads corresponding to a plurality of data access requests, the computing device performs the processes or threads corresponding to the plurality of data access requests in a synchronous manner, wherein the plurality of data access requests comprise the first data access request.

6. The method according to any one of claims 1 to 5, wherein the memory expansion card is integrated into the computing device or is inserted into the computing device in a hot swap manner.

7. The method according to any one of claims 1 to 6, wherein the memory expansion card comprises a redundant array of independent disks.

8. A data access apparatus, wherein the apparatus comprises:
a communication module, configured to receive a first data access request generated by a computing device based on an internal bus protocol, wherein the internal bus protocol comprises a bus protocol for accessing internal memory space of the computing device, and the first data access request comprises a virtual address in the internal memory space;
a conversion module, configured to perform protocol conversion on the first data access request to obtain a second data access request in an external bus protocol format, wherein the external bus protocol comprises a bus protocol for accessing external memory space of the computing device, and the second data access request comprises a physical address in the external memory space; and
an access module, configured to access the external memory space based on the second data access request.

9. The apparatus according to claim 8, wherein the virtual address in the internal memory space is a first virtual address visible to the computing device, and the conversion module is further configured to:
convert the first virtual address visible to the computing device into a second virtual address visible to the memory expansion card; and
convert the second virtual address into the physical address in the external memory space based on a mapping relationship between a virtual address and a physical address in an index.

10. The apparatus according to claim 8 or 9, wherein the external memory space comprises at least one of a local external memory space and a remote external memory space; and
the access module is specifically configured to:
when the external memory space comprises the remote external memory space, access the remote external memory space through remote direct memory access RDMA based on the second data access request.

11. The apparatus according to any one of claims 8 to 10, wherein the internal bus protocol comprises any one of a peripheral component interconnect PCI protocol, a peripheral component interconnect express PCI-E protocol, an Intel^{™} quick path interconnect QPI protocol, or a universal bus UB protocol, and the external bus protocol comprises any one of a small computer system interface SCSI or a serial attached small computer system interface SAS.

12. A memory expansion card, comprising a processor and a memory, wherein the memory stores computer-readable instructions, and the processor executes the computer-readable instructions, to enable the memory expansion card to perform the method according to any one of claims 1 to 7.

13. A computer-readable storage medium, comprising computer-readable instructions, wherein when the computer-readable instructions are run on a memory expansion card, the memory expansion card is enabled to perform the method according to any one of claims 1 to 7.

14. A computer program product, comprising computer-readable instructions, wherein when the computer-readable instructions are run on a memory expansion card, the memory expansion card is enabled to perform the method according to any one of claims 1 to 7.

15. A data access system, comprising a computing device and a memory expansion card, wherein
the computing device is configured to generate a first data access request based on an internal bus protocol, wherein the internal bus protocol comprises a bus protocol for accessing internal memory space of the computing device, and the first data access request comprises a virtual address in the internal memory space; and
the memory expansion card is configured to receive the first data access request sent by the computing device, perform protocol conversion on the first data access request to obtain a second data access request in an external bus protocol format, and access external memory space of the computing device based on the second data access request, wherein the external bus protocol comprises a bus protocol for accessing the external memory space of the computing device, and the second data access request comprises a physical address in the external memory space.
